Europäisches Patentamt

European Patent Office

Office européen des brevets

(11) Veröffentlichungsnummer: **0 244 788 B1**

# (12) EUROPÄISCHE PATENTSCHRIFT

(45) Veröffentlichungstag der Patentschrift: **30.10.91**

(21) Anmeldenummer: **87106356.6**

(22) Anmeldetag: **30.04.87**

(51) Int. Cl.⁵: **G01B 11/10**

(54) Vorrichtung zur Messung des Querschnitts oder des Volumens eines laufenden Fadens.

(30) Priorität: **07.05.86 CH 1888/86**

(43) Veröffentlichungstag der Anmeldung:
**11.11.87 Patentblatt 87/46**

(45) Bekanntmachung des Hinweises auf die
Patenterteilung:
**30.10.91 Patentblatt 91/44**

(84) Benannte Vertragsstaaten:
**BE DE FR GB IT NL**

(56) Entgegenhaltungen:
**DE-C- 2 602 465**
**GB-A- 2 077 426**

**Patent Abstract of Japan, Band 7, nr 282
(P-243)(1427) 16 Dezember 1983 & JP-
A-58158605**

**Feinwerktechnik und Messtechnik Band 89,
Heft 2, März 1981, Seiten 87-89, München
BRD, H Buschmann: "Optische Wegmessonde"**

(73) Patentinhaber: **ZELLWEGER USTER AG**
**Wilstrasse 11**
**CH-8610 Uster(CH)**

(72) Erfinder: **Ackermann, Hans**
**Tödistrasse 16**
**CH-8712 Stäfa(CH)**
Erfinder: **Aeppli, Kurt**
**Haegetstalstrasse 15**
**CH-8610 Uster(CH)**
Erfinder: **Brassel, Peter**
**Bonstettenstrasse 11**
**CH-8610 Uster(CH)**

## Beschreibung

Die Erfindung betrifft eine Vorrichtung zur Messung des Querschnitts oder des Volumens eines laufenden Fadens, mit einem Messspalt, an dessen einer Seite eine von ausserhalb des Messspalts durch eine Lichtquelle beleuchtete und durch eine Blende teilweise abgedeckte Streuscheibe und an dessen anderer Seite ein fotoelektrisches Element angeordnet ist, dessen Ausgangssignal ein Mass für den Querschnitt und/oder das Volumen des zwischen der Streuscheibe und dem fotoelektrischen Element laufenden Fadens darstellt.

Bei einer aus der DE-C-2 602 465 bekannten Vorrichtung dieser Art, ist zur Erzielung eines genaueren Messergebnisses, insbesondere bei einem changierenden Faden, die Streuscheibe so ausgebildet, dass sie parallel zum Faden gemessen, eine zur Flächenmitte hin abnehmende Breite besitzt. Wenn der Faden von der Mitte aus zu den Rändern der Streuscheibe hin changiert, überdeckt er die Streuscheibe mit einer grösseren Länge als in der Streuscheibenmitte, wo die Leuchtdichte grösser ist. Dadurch ist der Effekt der Abschattung des fotoelektrischen Elements unabhängig von der jeweiligen Lage des Fadens im Changierbereich immer gleich. Die Verringerung der Breite der Streuscheibe wird durch zwei Einsattelungen an deren oberem und unterem Rand oder durch eine segmentähnliche Blende bewirkt.

Bei derartigen Messvorrichtung muss innerhalb des Messspalts ein möglichst homogenes Messfeld bestehen und zwar mit Homogenität in allen drei Koordinatenrichtungen. Bei der genannten bekannten Vorrichtung wird zwar in der Streuscheibenebene senkrecht zur Fadenlaufrichtung eine gute Homogenität erreicht, dafür ist aber das Messfeld in Fadenlaufrichtung wegen der über die ganze Streuscheibe reichenden Einsattelung oder Blende nicht homogen. Letzteres verursacht eine gewisse Messungenauigkeit, welche insbesondere bei Garnfehlern, die kürzer sind als die entsprechende Messfeldlänge, zu störenden und nicht tolerierbaren Messfehlern führt. Derartige Garnfehler sind beispielsweise kurze Dickstellen.

Der Erfindung liegt nun die Aufgabe zugrunde, im Messspalt ein möglichst homogenes Messfeld zu erzeugen, welches insbesondere auch in Fadenlaufrichtung eine gute Homogenität aufweist und damit auch bei laufenden und changierenden Fäden mit kurzen Garnfehlern, wie beispielsweise kurzen Dickstellen, ein genaues Messergebnis ermöglicht.

Diese Aufgabe wird erfindungsgemäss dadurch gelöst, dass die Blende in der optischen Achse der Lichtquelle angeordnet ist und einen diese optische Achse umgebenden zentralen Bereich der Streuscheibe so abdeckt, dass im abgedeckten Bereich im Messspalt die Leuchtdichte an den ausserhalb dieses Bereichs herrschenden Wert angepasst ist.

Praktische Versuche haben gezeigt, dass mit der erfindungsgemässen Lösung im Messspalt ein in allen Koordinatenrichtungen homogenes Messfeld erzielt wird, und dass das Messsignal auch bei kurzen Garnfehlern genau und reproduzierbar ist.

Gemäss einer bevorzugten Ausführungsform der erfindungsgemässen Vorrichtung ist die Blende an ihrer der Lichtquelle zugewandten Oberfläche reflektierend ausgebildet und ist zwischen Lichtquelle und Streuscheibe ein die Blende umgebendes lichtleitendes Element angeordnet, durch welches eine Umlenkung des von der Blende reflektierenden Lichtanteils an die Streuscheibe erfolgt.

Diese Ausführungsform hat den Vorteil, dass einerseits die Homogenität des Messfelds nochmals verbessert wird, und dass andererseits das von der Blende abgedeckte Licht nicht verlorengeht, sondern in den Messspalt gelangt, was zu einer Erhöhung des Werts des Messsignals führt und damit eine Verringerung des Stroms der Lichtquelle erlaubt.

Im folgenden wird die Erfindung anhand von Ausführungsbeispielen und der Zeichnungen näher erläutert; es zeigen:

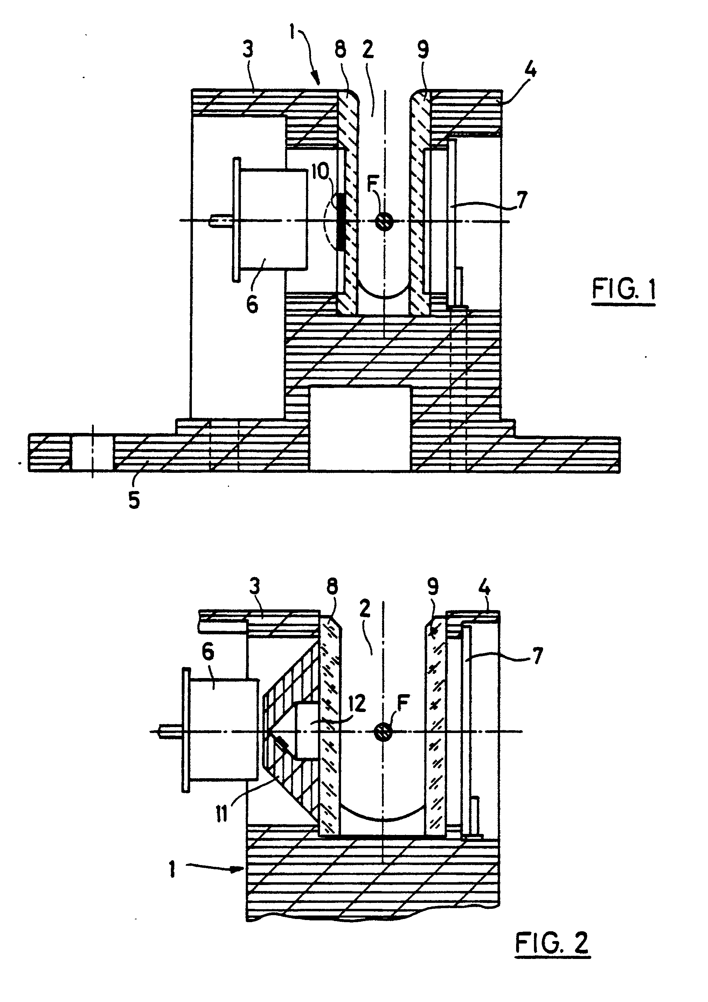

Fig. 1 bis 4    je eine Schnittdarstellung eines Ausführungsbeispiels einer erfindungsgemässen Vorrichtung in vergrössertem Massstab.

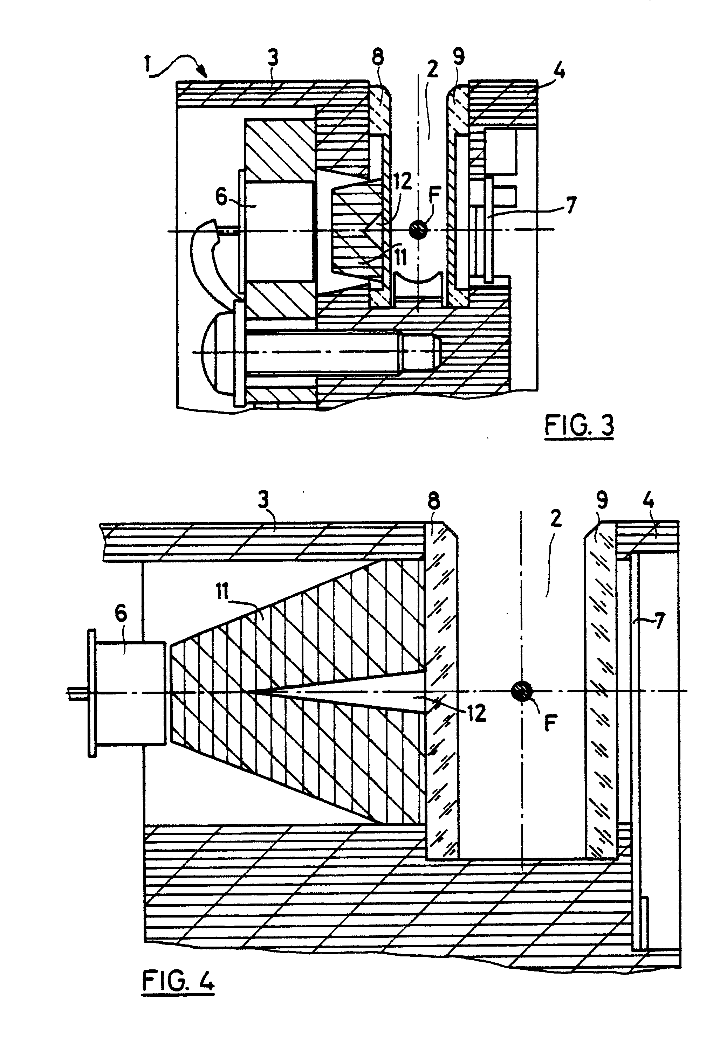

Die in den Figuren dargestellten Vorrichtungen zur Messung der Querschnitts oder des Volumens eines laufenden Fadens F weisen je ein Gehäuse 1 mit einem Messspalt 2 auf, durch welchen der zu vermessende Faden F läuft. Die dargestellten Ausführungsbeispiele zeigen Messvorrichtungen mit verschieden breitem Messspalt 2, welcher in den Figuren 1 und 3 etwa 2,5 mm, in Fig. 2 etwa 4 mm und in Fig. 4 etwa 6 mm breit ist.

Das einstückig aus Kunststoff gespritzte Gehäuse 1 besteht im wesentlichen aus zwei den Messspalt 2 umgebenden Seitenwänden 3 und 4, in denen die optischen und elektronischen Teile der Vorrichtung angeordnet sind, und aus einer die Seitenwände 3, 4 tragenden Grundplatte 5, welche mit ersten und zweiten Bohrungen für Befestigungsschrauben des Gehäuses 1 bzw. für die elektrischen Anschlussleitungen der elektronischen Teile versehen ist.

In der in den Figuren linken Seitenwand ist eine Lichtquelle 6, vorzugsweise eine Leuchtdiode angeordnet, welche Licht in Richtung auf eine in der rechten Seitenwand 4 angeordnete, vorzugsweise in dieser eingegossene, Fotodiode 7 aussendet. Der Messspalt 2 ist gegen die beiden Seitenwände 3 und 4 des Gehäuses 1 hin je durch eine Streuscheibe 8 bzw. 9 abgedeckt, wodurch im Messspalt 2 eine diffuse Beleuchtung entsteht, welche auch als diffuses Licht auf die Fotodiode 7 fällt. Die Streuscheibe 9 vor der Fotodiode 7 kann auch als Filterscheibe zur Abschirmung des Umgebungslichts ausgebildet sein oder sie kann gleichzeitig als Streu- und als Filterscheibe dienen.

Wenn ein den Messspalt 2 durchlaufender Faden F eine von einem Garnfehler, beispielsweise von einer Dick- oder einer Dünnstelle herrührende Querschnittsänderung aufweist, dann ändert sich die Abschattung der Fotodiode 7 und dementsprechend deren Ausgangssignal. Anhand dieser Aenderung des Ausgangssignals der Fotodiode 7 kann nun entweder die Fehlstelle als solche bloss registriert, oder kann der laufende Faden F angehalten und die Fehlstelle beseitigt werden.

Für die Streuscheiben 8 und 9 haben sich verschiedene Materialien als geeignet erwiesen. Bei den Ausführungsbeispielen der Fig. 1 und 3 sind die Streuscheiben 8 und 9 durch Plättchen aus Sinterkeramik gebildet, bei den Ausführungsbeispielen der Fig. 2 und 4 ist die Streuscheibe 8 aus Milch- oder Opalglas und die als Filterscheibe wirkende Scheibe 9 ist aus Filterglas.

Damit das Ausgangssignal der Fotodiode 7 aussagekräftig und reproduzierbar ist, muss im Messspalt 2 ein möglichst homogenes Messfeld herrschen, das heisst, die Beleuchtung muss möglichst homogen sein und zwar in allen drei Koordinatenrichtungen. In der Richtung quer und parallel zum Messspalt 2, das sind die beiden Richtungen senkrecht zur Fadenlaufrichtung, wegen der Changierbewegung des Fadens F oder des Fehlerquerschnitts, und in Fadenlaufrichtung, damit relativ zur Messfeldlänge kurze Garnfehler unabhängig von der Position des Fadens F relativ zur optischen Achse das gleiche Ausgangssignal der Fotodiode 7 bewirken.

Dieser Forderung steht aber die bekannte Tatsache entgegen, dass trotz Verwendung der Streuscheibe 8 im Messspalt 2 im Bereich der optischen Achse eine grössere Leuchtdichte herrscht als ausserhalb dieses Bereichs. Zur Anpassung der Leuchtdichte im Bereich der optischen Achse an den Wert ausserhalb dieses Bereichs ist gemäss Fig. 1 eine Blende 10 vorgesehen, welche in der optischen Achse der Leuchtdiode 6 angeordnet ist und einen gewissen Bereich der Streuscheibe 8 abdeckt. Die Grösse dieses Bereichs ist so gewählt, dass der Spitzenwert der Leuchtdichte gerade so weit reduziert wird, dass er an die Leuchtdichte ausserhalb dieses Bereichs angepasst ist.

Durch die Blende 10 wird also mit anderen Worten die Spitze der Leuchtdichte im Bereich der optischen Achse abgeschnitten. Praktische Versuche haben ergeben, dass bei der in Fig. 1 dargestellten Breite des Messspalts 2 von etwa 2,5 mm die Blende 10 einen Flächeninhalt von etwa 4 mm² aufweisen soll. Die Blende 10 kann dabei durch ein Plättchen von der Gestalt einer regelmässigen Fläche, beispielsweise eines Kreises, eines Vielecks oder auch eines Sternchens gebildet sein.

Die Blende 10 braucht nicht unbedingt flächenhaft, sondern kann auch dreidimensional ausgebildet sein, beispielsweise so wie in Fig. 1 gestrichelt angedeutet, als Kugelkalotte, oder als Kegel mit der Spitze gegen die Leuchtdiode 6, oder als Zylinder, und dergleichen.

Bei den in den Figuren 2 bis 4 dargestellten Ausführungsbeispielen ist zwischen der Leuchtdiode 6 und der Streuscheibe 8 ein Lichtleiter 11 angeordnet, wodurch die Homogenität der Beleuchtung im Messspalt 2 verbessert wird. Der Lichtleiter 11 besteht aus einem geeigneten Material wie Glas oder Plexiglas und weist die Form eines Kegelstumpfs auf. Seine an der Streuscheibe 8 anliegende Basisfläche ist mit einer geeigneten Vertiefung 12 versehen. In Fig. 2 ist die Vertiefung 12 durch eine Sackbohrung gebildet, deren kegelförmiger Abschluss bezüglich seines Oeffnungswinkels an denjenigen des Lichtleiters 11 angepasst ist, in Fig. 3 durch eine kegelförmige Vertiefung mit einem Oeffnungswinkel von etwa 90° und in Fig. 4 durch eine kegelförmige Vertiefung mit einem Oeffnungswinkel von etwa 15°. Weitere Variationen der Ausbildung der Vertiefung 12 sowie auch Kombinationen der dargestellten Ausführungsbeispiele sind möglich.

Die die Vertiefung 12 bildende Sackbohrung von Fig. 2 ist an der Aussenfläche ihres kegelförmigen Teils verspiegelt und wirkt somit einerseits als Blende und reflektiert anderseits das auftreffende Licht in den Lichtleiter 11. Dieses von der "Blende" 12 reflektierte Licht wird bei geeigneter Wahl des Oeffnungswinkels des kegelstumpfförmigen Lichtleiters 11 (darstellungsgemäss etwa 45°) an dessen Mantel totalreflektiert und gelangt somit in den Messspalt 2. Selbstverständlich könnte auch bei den Ausführungsbeispielen der Fig. 3 und 4 die Vertiefung 12 in der beschriebenen Weise verspiegelt sein, anderseits ist aber in vielen Fällen eine Verspiegelung nicht unbedingt erforderlich, weil das von der Leuchtdiode 6 ausgesandte Licht ohnehin im Lichtleiter 11 konzentriert ist.

Durch die dargestellte Ausbildung von Lichtleiter 11 und "Blende" 12 geht also das von der Blende abgedeckte Licht nicht verloren, sondern gelangt in den Messspalt 2, wodurch das Ausgangssignal der Fotodiode 7 erhöht wird, was wiederum eine Verringerung des Leuchtdioden-Stroms ermöglicht. Der Anteil des in den Messspalt 2 gelangenden, von der Blende 12 reflektierten Lichtes kann noch dadurch erhöht werden, dass der Mantel des kegelstumpfförmigen Lichtleiter 11 innenverspiegelt wird.

**Patentansprüche**

1. Vorrichtung zur Messung des Querschnitts oder des Volumens eines laufenden Fadens (F), mit einem Messspalt (2), an dessen einer Seite eine von ausserhalb des Messspalts durch eine Lichtquelle (6) beleuchtete und durch eine Blende (10, 12) teilweise abgedeckte Streuscheibe (8) und an dessen anderer Seite ein fotoelektrisches Element (7) angeordnet ist, dessen Ausgangssignal ein Mass für den Querschnitt und/oder das Volumen des zwischen der Streuscheibe und dem fotoelektrischen Element laufenden Fadens darstellt, dadurch gekennzeichnet, dass die Blende (10, 12) in der optischen Achse der Lichtquelle (6) angeordnet ist und einen diese optische Achse umgebenden zentralen Bereich der Streuscheibe so abdeckt, dass im abgedeckten Bereich im Messspalt (2) die Leuchtdichte an den ausserhalb dieses Bereichs herrschenden Wert angepasst ist.

2. Vorrichtung nach Anspruch 1, dadurch gekennzeichnet, dass die Blende (12) an ihrer der Lichtquelle (6) zugewandten Fläche reflektierend ausgebildet, und dass zwischen Lichtquelle (6) und Streuscheibe (8) ein die Blende (12) umgebendes lichtleitendes Element (11) angeordnet ist, durch welches eine Umlenkung des von der Blende reflektierten Lichtanteils an die Streuscheibe (8) erfolgt.

3. Vorrichtung nach Anspruch 2, dadurch gekennzeichnet, dass die Blende (12) an ihrer reflektierenden Fläche eine an die Form des lichtleitenden Elements (11) angepasste Kontur aufweist und dass die Umlenkung des von der Blende in das lichtleitende Element reflektierten Lichtanteils durch Totalreflexion an dessen Aussenmantel erfolgt.

4. Vorrichtung nach Anspruch 2 oder 3, dadurch gekennzeichnet, dass das lichtleitende Element (11) die Form eines Kegelstumpfs mit gegen die Streuscheibe (8) hin zunehmendem Durchmesser aufweist, und dass die Blende (12) durch eine in einen Kegel auslaufende Sackbohrung oder durch eine kegelförmige Vertiefung in der den grösseren Durchmesser aufweisenden Bodenfläche des Kegelstumpfs gebildet ist.

5. Vorrichtung nach Anspruch 4, dadurch gekennzeichnet, dass der kegelförmige Teil der die Blende (12) bildenden Bohrung einen dem kegelförmigen lichtleitenden Element (11) entsprechenden Oeffnungswinkel aufweist und zur Reflexion des von der Lichtquelle (6) ausgesandten Lichtes verspiegelt ist.

6. Vorrichtung nach Anspruch 5, dadurch gekennzeichnet, dass das lichtleitende Element (11) zur Umlenkung des von der Blende (12) reflektierten Lichtanteils an die Streuscheibe (8) an seinem kegelstumpfförmigen Mantelteil gegen die Blende hin verspiegelt ist.

7. Vorrichtung nach einem der Ansprüche 1 bis 6, dadurch gekennzeichnet, dass an der anderen Seite des Messspalts (2), vor dem fotoelektrischen Element (7), eine weitere Streuscheibe (9) angeordnet ist.

8. Vorrichtung nach Anspruch 7, dadurch gekennzeichnet, dass die weitere Streuscheibe (9) alternativ oder zusätzlich als Filterscheibe ausgebildet ist.

**Claims**

1. Device for measuring the cross section or volume of a running yarn (F), comprising a measurement gap (2), at one side of which a diffusion disc (8) is arranged, which disc is illuminated from outside of the measurement gap by a light source (6) and partly covered by a screen (10, 12), and at the other side of which a photoelectric element (7) is arranged, the output signal of which is a measure of the cross section and/or volume of the yarn running between the diffusion disc and the photoelectric element, characterised in that the screen (10, 12) is arranged along the optical axis of the light source (6) and covers a central area, which surrounds this optical axis, of the diffusion disc such that the luminance in the covered area in the measurement gap (2) is adapted to the value prevailing outside of this area.

2. Device according to claim 1, characterised in that the screen (12) is reflective at its surface which faces the light source (6), and that a light-conducting element (11), which surrounds the screen (12), is arranged between the light source (6) and the diffusion disc (8), via which element the light portion which is reflected from the screen is deflected to the diffusion disc (8).

3. Device according to claim 2, characterised in that the contour of the screen (12) at its reflective surface is adapted to the shape of the light-conducting element (11), and that the light portion which is reflected from the screen into the light-conducting element is totally reflected at the sheath of the latter.

4. Device according to claim 2 or 3, characterised in that the light-conducting element (11) is in the form of a truncated cone with a diameter which increases towards the diffusion disc (8), and that the screen (12) is formed by a blind hole ending in a cone or by a conical cavity in the base of the truncated cone having the greater diameter.

5. Device according to claim 4, characterised in that the conical part of the hole forming the screen (12) has a cone angle corresponding to the conical light-conducting element (11) and is mirror-coated to reflect the light emitted from the light source (6).

6. Device according to claim 5, characterised in that the light-conducting element (11) is mirror-coated on its truncated cone-shaped sheath part towards the screen in order to deflect the light portion reflected from the screen (12) to the diffusion disc (8).

7. Device according to one of claims 1 to 6, characterised in that another diffusion disc (9) is arranged on the other side of the measurement gap (2), in front of the photoelectric element (7).

8. Device according to claim 7, characterised in that the other diffusion disc (9) is alternatively or additionally formed as a filter disc.

## Revendications

1. Dispositif pour la mesure de la section transversale ou du volume d'un fil courant (F), avec une fente de mesure (2), sur un côté de laquelle est disposée, extérieurement à la fente de mesure une vitre diffusante (8) éclairée par une source lumineuse (6) et partiellement recouverte par un écran (10,12) et sur l'autre côté de laquelle est disposé un élément photoélectrique (7) dont le signal de sortie représente une mesure de la section transversale et/ou du volume du fil défilant entre la vitre diffusante et l'élément photoélectrique, caractérisé en ce que l'écran (10,12) est disposé dans l'axe optique de la source de lumière (6) et recouvre une zone centrale, entourant cet axe optique, de la vitre diffusante de telle façon que, dans la zone masquée dans la fente de mesure (2), la luminance soit adaptée à la valeur régnant à l'extérieur de cette zone.

2. Dispositif selon la revendication 1, caractérisé en ce que l'écran (12) est réalisé de façon réfléchissante sur sa face orientée vers la source lumineuse (6) et en ce qu'entre la source lumineuse (6) et la vitre diffusante (8) est disposé un élément conducteur de lumière (11) entourant l'écran (12) et par lequel s'effectue une déviation, vers la vitre diffusante (8), de la fraction de lumière réfléchie par l'écran.

3. Dispositif selon la revendication 2, caractérisé en ce que l'écran (12) présente, sur sa face réfléchissante, un contour adapté à la forme de l'élément guide de lumière (11) et en ce que la déviation de la fraction de lumière, réfléchie par l'écran dans l'élément photoconducteur, s'effectue par réflexion totale sur la surface latérale externe de celui-ci.

4. Dispositif selon la revendication 2 ou 3, caractérisé en ce que l'élément photoconducteur (11) présente la forme d'un tronc de cône à diamètre croissant en direction de la vitre diffusante (8) et en ce que l'écran (12) est constitué par un perçage borgne se terminant par un cône ou par une cavité conique dans la surface de base du tronc de cône présentant le plus grand diamètre.

5. Dispositif selon la revendication 4, caractérisé en ce que la partie conique du perçage formant l'écran (12) présente un angle d'ouverture correspondant à l'élément photoconducteur conique (11) et est spéculairement métallisée pour la réflexion de la lumière émise par la source de lumière (6).

6. Dispositif selon la revendication 5, caractérisé en ce que l'élément conducteur de lumière (11) est spéculairement métallisé de façon réfléchissante sur sa portion de surface latérale tronconique en direction de l'écran pour la déviation, vers la vitre diffusante (8), de la fraction de lumière réfléchie par l'écran (12).

7. Dispositif selon l'une des revendications 1 à 6, caractérisé en ce qu'une autre vitre diffusante (9) est disposée sur l'autre côté de la fente de mesure (2) devant l'élément photoélectrique (7).

8. Dispositif selon la revendication 7, caractérisé en ce que l'autre vitre diffusante (9) est réalisée en variante ou additionnellement sous forme de vitre filtrante.

FIG. 1

FIG. 2

FIG. 3

FIG. 4